(19) Europäisches Patentamt
European Patent Office
Office européen des brevets

(11) **EP 4 571 680 A1**

(12) **EUROPEAN PATENT APPLICATION**
published in accordance with Art. 153(4) EPC

(43) Date of publication:
**18.06.2025 Bulletin 2025/25**

(21) Application number: 23852880.6

(22) Date of filing: **03.08.2023**

(51) International Patent Classification (IPC):
**G06V 20/64** (2022.01)   **G06V 10/422** (2022.01)
**G06V 10/764** (2022.01)   **G06V 10/82** (2022.01)
**G06T 7/60** (2017.01)   **G06N 3/08** (2023.01)

(52) Cooperative Patent Classification (CPC):
**G06N 3/08; G06T 7/60; G06V 10/422;
G06V 10/764; G06V 10/82; G06V 20/64**

(86) International application number:
**PCT/KR2023/011438**

(87) International publication number:
**WO 2024/035000 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.08.2022 KR 20220099006**

(71) Applicant: **IUCF-HYU (Industry-University
Cooperation
Foundation Hanyang University)
Seoul 04763 (KR)**

(72) Inventors:
• **CHAE, Dong-Kyu
Seoul 04763 (KR)**
• **KIM, Seonggyeom
Seoul 04763 (KR)**

(74) Representative: **Hertin und Partner
Rechts- und Patentanwälte PartG mbB
Kurfürstendamm 63
10707 Berlin (DE)**

(54) **CONVOLUTIONAL NEURAL NETWORK STRUCTURE FOR EXPLAINABLE 3D SHAPE
LEARNING, AND METHOD AND SYSTEM FOR 3D SHAPE LEARNING USING SAME**

(57)    Disclosed are a convolutional neural network structure for explainable 3D shape learning, and a method and a system for 3D shape learning by using same. A method for shape learning performed by a shape learning system according to an embodiment may comprise: extracting geodesic features and geometric features from three-dimensional shape data; and classifying an object through a convolution operation on the extracted geodesic features and the extracted geometric features with respect to faces constituting the three-dimensional shape data.

FIG. 1

<u>100</u>

EP 4 571 680 A1

**Description**

[Technical Field]

The description below relates to a three-dimensional shape learning technology.

[Background Art]

3D shape analysis using deep learning mainly consists of multi-view and voxel methods, and, these days, there is growing interest in models using graph and mesh methods.

Multi-view and voxel-based models convert irregular 3D shapes into regular representations for processing by neural networks. Although these methods can perform general convolution operations, they are sensitive to noise due to the loss of topological connectivity and reduced data density which occur in representation conversion, resulting in unstable results or requiring a high computational amount.

The graph method uses geodesic-based features such as paths between nodes and edges of the graph and performs convolution operations in non-Euclidean space. Additionally, the mesh method uses geometric features such as the positions and orientations of nodes and faces and performs a convolution operation tailored to the 3D shape. Because these methods empirically use low-level features to process specific 3D shape data sets, they may have limitations in processing all types of 3D shapes.

Additionally, deep learning cannot explain the reason for inference due to internal nonlinearity. To solve this problem, research on explainable artificial intelligence (eXplainable Artificial Intelligence) is actively underway. However, although much research has been conducted on model description techniques for 2D images, general methods cannot be applied to 3D shapes, so technologies specialized for models and data are being studied little by little.

[DISCLOSURE]

[Technical Problem]

The present disclosure provides a method and system for extracting geodesic features and geometric features from three-dimensional shape data and classifying an object through a convolution operation on the extracted geodesic features and geometric features with respect to faces constituting the three-dimensional shape data.

The present disclosure provides a convolution-based neural network model for explainable three-dimensional shape learning that detects geodesic and geometric features of three-dimensional shape data while maintaining spatial information.

[Technical Solution]

There is provided a method for shape learning performed by a shape learning system, the method comprising: extracting geodesic features and geometric features from three-dimensional shape data; and classifying an object through a convolution operation on the extracted geodesic features and the extracted geometric features with respect to faces constituting the three-dimensional shape data.

The method may further comprise visualizing a result of object classification from the three-dimensional shape data by using a convolution-based neural network model for explainable three-dimensional shape learning.

The convolution-based neural network model for explainable three-dimensional shape learning may include: a descriptor layer that extracts geodetic features and geometric features using a target face and adjacent faces from the three-dimensional shape data; and a convolutional layer that performs a convolution operation using the extracted geodetic features and geometric features.

The three-dimensional shape data may have a structure in which nodes, edges, and faces constituting the three-dimensional shape data are irregular.

The extracting may include constructing, in list form, identification information for a plurality of faces adjacent to each face with respect to the faces constituting the three-dimensional shape data, and creating a data structure so as to obtain information about the nodes and edges of each face through the identification information constructed in list form.

The extracting may include extracting geodesic features from three-dimensional shape data using order-invariant kernel mapping.

The extracting may include extracting geometric features based on the positions and orientations of a target face and surrounding faces.

The extracting may include extracting geometric features based on information on the distance ratios and angles between the target surface and the surrounding faces.

The classifying may include feeding, into a convolutional layer, a feature vector for each face that integrates the geodesic features and the geometric features.

The classifying may include performing a one-dimensional convolution by using a feature vector that inherits a particular face based on the feature vector of each face and a feature vector that aggregates the relationships between the particular face and faces adjacent to the particular face.

The extracting may include performing a GAP (global average pooling) operation to obtain a score for each class since the one-dimensional convolution produces an output with the number of faces remaining the same, and performing object classification based on the obtained score.

There is provided a computer program stored in a non-transitory computer-readable recording medium in order to execute the method for shape learning by a shape learning system.

There is provided a shape learning system comprising: a feature extraction unit that extracts geodesic features and geometric features from three-dimensional shape data; and classifying an object through a convolution operation on the extracted geodesic features and the extracted geometric features with respect to faces constituting the three-dimensional shape data.

The shape learning system may visualize a result of object classification from the three-dimensional shape data by using a convolution-based neural network model for explainable three-dimensional shape learning.

[Advantageous Effects]

It is possible to improve object classification performance by extracting geodesic features and geometric features from 3D shape data and performing a convolution operation on the extracted geodesic features and the extracted geometric features with respect to faces constituting the 3D shape data.

Interference results can be visualized without modifying the model through a convolution-based neural network model for learning explainable 3D shapes.

[Description of Drawings]

FIG. 1 is a block diagram for explaining a configuration of a shape learning system, according to one embodiment.
FIG. 2 is a flowchart for explaining a method for shape learning, according to one embodiment.
FIG. 3 is a diagram for explaining an operation of an explainable model, according to one embodiment.
FIG. 4 is a diagram for explaining a geodesic path between a target face and a neighboring face.
FIG. 5 is a diagram for explaining a geometric relationship between a target face and a neighboring face, according to one embodiment.
FIG. 6 is a diagram for explaining a structure of a convolutional layer of an explainable model, according to one embodiment.
FIGS. 7 to 10 are examples for explaining results of an explainable model, according to an embodiment.

[Best Mode]

Hereinafter, an embodiment will be described in detail with reference to the accompanying drawings.

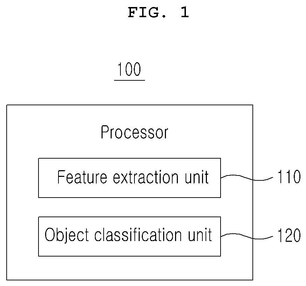

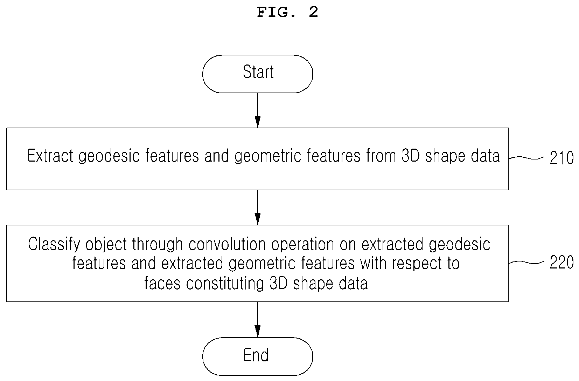

FIG. 1 is a block diagram for explaining a configuration of a shape learning system, according to one embodiment. FIG. 2 is a flowchart for explaining a method for shape learning, according to one embodiment.

A processor of the shape learning system 100 may include a feature extraction unit 110 and an object classification unit 120. These components of the processor may be expressions of different functions performed by the processor according to a control instruction provided by a program code stored in the shape learning system. The processor and the components of the processor may control the shape learning system to perform steps 210 to 220, which are included in the method for shape learning of FIG. 2. In this case, the processor and the components of the processor may be implemented to execute instructions according to the code of an operating system include in memory and the code of at least one program.

The processor may load, into the memory, a program code stored in a file of a program for the method for shape learning into the memory. For example, when a program is executed in the shape learning system, the processor may control the shape learning system to load a program code from a file of the program under the control of the operating system. In this case, the feature extraction unit 110 and the object classification unit 120 each may be different functional expressions of the processor for executing steps 210 and 220 after executing instructions of corresponding portions of the program code loaded into the memory.

In step 210, the feature extraction unit 110 may extract geodesic features and geometric features from 3D shape data. In graph theory, geodesic information is the distance between two nodes expressed as the shortest path connecting two points. In 3D shape data, neighboring faces (hereinafter referred to as "neighboring faces") have the same nodes and edge, so they have the same geodesic information. If data can be expressed in a vector space, operations may be performed by expressing nodes and edges as vectors. Although a geodesic convolution exists as a method of operation, designed to be performed by expressing nodes and edges as vectors, unstable results may be produced depending on the order of the nodes and the edges. Accordingly, the feature extraction unit 110 can extract geodesic features from 3D shape data using order-invariant kernel mapping. The feature extraction unit 110 can extract geodesic features without losing spatial information by performing order-independent operations on information about the nodes and edges of the target face and surrounding faces. Additionally, the feature extraction unit 110 may extract geometric features from the 3D shape data based on the positions and orientations of the target face and surrounding faces. The feature extraction unit 110 can obtain robust results without depending on the data size by performing order-independent operations based on information on the distance ratios and angles between the target face and the surrounding faces.

In step 220, the object classification unit 120 may classify an object through a convolution operation on the extracted geodesic features and the extracted geometric features with respect to faces constituting the 3D shape data. The object classification unit 120 may integrate information on the target face and the neighboring faces by performing the operation for each face. The object classification unit 120 may apply a model description technique used in a two-dimensional image classification problem using a one-dimensional convolution operation.

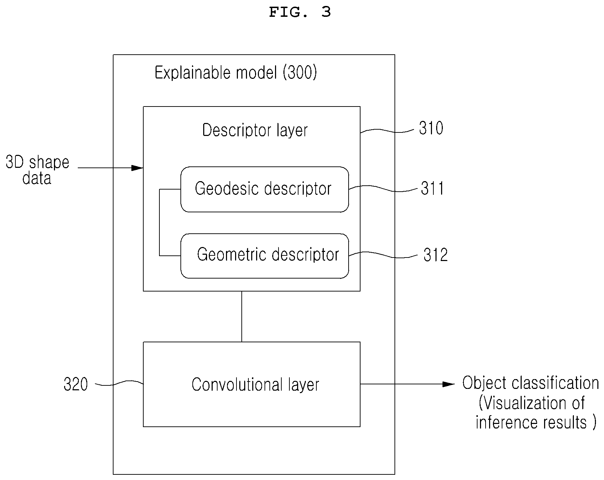

FIG. 3 is a diagram for explaining an operation of an explainable model, according to one embodiment.

3D shape data is data that is actively used in computer graphics. However, due to their non-uniform and irregular nature, learning such data with a Deep Neural Network is not straightforward. Transforming three-dimensional shape data to simpler structures leads to other issues including spatial information loss, making it difficult to explain neural network inference. In the embodiment, an attempt is made to efficiently process data and visualize the explanation through an explainable model (ExMeshCNN) 300 that detects geodesic and geometric characteristics of 3D shape data while retaining spatial information.

The explainable model 300 refers to a convolution-based neural network model for learning explainable 3D shapes. The explainable model 300 may include a descriptor layer 310 and a convolutional layer 320. The descriptor layer 310 may include a geodesic descriptor 311 that extracts geodesic features from 3D shape data using a target face and adjacent faces, and a geometric descriptor 312 that extracts geometric features from the 3D shape data using the target face and the adjacent faces. The convolutional layer 320 may perform a convolution operation using the extracted geodesic features and geometric features.

In the first layer of the explainable model 300, it equips the learnable edge-based geodesic descriptor 311 and face-based geometric descriptor 312 to obtain high-level features from faces, which are implemented as the 1D-CNN operation. Then, the convolutional layer 320 performing per-face convolution follows the descriptor layer 310, which aims to learn local features within neighboring faces. Finally, the GAP operation and the softmax layer makes the output logit. As a result, the explainable model 300 learns the mesh in an end-to-end manner while retaining spatial information from the input to the output, which endows model interpretability via applying input attribution methods.

The shape learning system can classify an object from 3D shape data using the explainable model 300. At this time, the 3D shape data cannot be fed as input into a neural network model because of its structure in which the nodes, edges, and faces are irregular. Accordingly, the shape learning system can perform a data preprocessing process. Specifically, the shape learning system can generate, in list form, identification information for three faces adjacent to each face of the 3D shape data with respect to the 3D shape data. The shape learning system can create a data structure to obtain information about the nodes and edges of each face through the identification information.

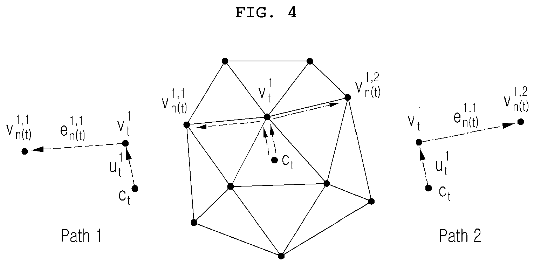

FIG. 4 is a diagram for explaining a geodesic path between a target face and a neighboring face, according to one embodiment.

The shape learning system may extract geodesic features and geometric features from 3D shape data and classify an object through a convolution operation with respect to faces constituting the 3D shape data. In addition, the shape learning system may explain the behavior of the model by designing it so that general techniques for explaining 2D image classification models can be easily applied in 3D.

More specifically, the descriptor layer is the first layer that tries to mine the geodesic and geometric features from faces constituting a mesh. Here, two types of learnable descriptors may be proposed to capture geodesic features and geometric features.

The goal of the geodesic descriptor is to extract geodesic local features of the faces that the existing mesh-based models often neglected due to the difficulty in defining a geodesic relationship between any two faces. In general, the geodesic distance between two vertices (points) is defined as the number of edges on the shortest path connecting the two vertices. Since the shape learning system performs face-level feature extraction and convolution, the relationship between faces can be expressed using geodesic distance. However, the geodesic descriptor will be introduced to solve the problem of simply applying a geodesic distance between faces.

Let a target face be $f_t$. Then we consider the vertices and edges aligned to $f_t$ towards estimating the geodesic

relationship between $f_t$ and its adjacent face.

Let the center point of $f_t$ be $c_t$, and let any one of the three vertices in $f_t$ be $v_t^j$ such that $j \in \{1, 2, 3\}$. Then, we denote $u_t^j = c_t - v_t^j$ to represent the relationship between $c_t$ and $v_t^j$. In addition, let $v_{n(t)}^{j,k}$ ($k \in 1, 2$) be any one of the vertices geodesically connected with $v_t^j$ among the neighboring faces of $f_t$, except the vertices belonging to $f_t$. Then, we denote $e_{n(t)}^{j,k} = v_t^j - v_{n(t)}^{j,k}$ to imply the relationship between $v_t^j$ and $v_{n(t)}^{j,k}$. Eventually, by the definition, the geodesic distance between the target face $f_t$ and its neighboring face (namely, $f_{n(t)}^j$ ) is the number of edges on the shortest path between the center point $c_t$ of $f_t$ and the vertex belonging to $f_{n(t)}^j$ .

However, one problem arises: $f_t$ and any adjacent surfaces have their shortest path length equal to two, as illustrated in FIG. 4. For example, the shortest path lengths of the geodesic paths between $c_t$ and $v_{n(t)}^{1,1}$ and between $c_t$ and $v_{n(t)}^{1,2}$ are 2, and actually it is the same in all other cases. Eventually, geodesic distance will not contain discriminative and meaningful information as a feature of a face. As an alternative to geodesic distance, we may consider geodesic convolution that can extract features considering the curvature of a path additionally. This solves the aforementioned problem because the result varies depending on the curvature of the shortest paths (e.g., Path 1 and Path 2 shown in FIG. 1). even though their lengths are the same. For geodesic convolution, the normal vector of the vertex $v_t^j$ , which is located on the middle of the path from the center point $c_t$ to $v_{n(t)}^{1,1}$ is additionally required for considering its curvature. The normal vector $\vec{n}_t^j \in R^3$ can be obtained simply by averaging the normal vectors of faces surrounding the vertex

Unfortunately, this geodesic convolution on geodesic paths also has some ambiguity due to their unordered nature. For example, as shown in FIG. 4, $v_t^1$ has two neighboring vertices $v_{n(t)}^{1,1}$ and $v_{n(t)}^{1,2}$ , where they form a path ( $u_t^1, e_{n(t)}^{1,1}$ ) and ( $u_t^1, e_{n(t)}^{1,2}$ ), respectively. In this case, since the order of these two paths is not defined, the result of the convolution operation involving these two paths may be different each time.

To solve this problem, instead of geodesic distances and geodesic convolution, the following descriptor that maps x to the feature space may be proposed.

## Equation 1:

$$K(\overline{a}_t) = \theta_0 \sum_i^3 u_t^j + \theta_1 \sum_j^3 \vec{n}_t^j + \theta_2 \sum_j^3 |e_{n(t)}^{j,1} - e_{n(t)}^{j,2}|$$

where $a_t$ includes the indices of the target face and its three topological neighboring faces. $j$ is the indices of the three neighboring faces. The term $|e_{n(t)}^{j,1} - e_{n(t)}^{j,2}|$ indicates the relative relationship between the two paths, regardless of the order. $\theta_0$, $\theta_1$, and $\theta_2$ each is a learnable parameter, which is the same as the filter of 1-D CNN. Since the geodesic descriptor is implemented by following the standard 1-D CNN format, the explainable model (ExMeshCNN) is able to retain spatial information from the input to the end, making it suitable for work with input attribution methods afterwards.

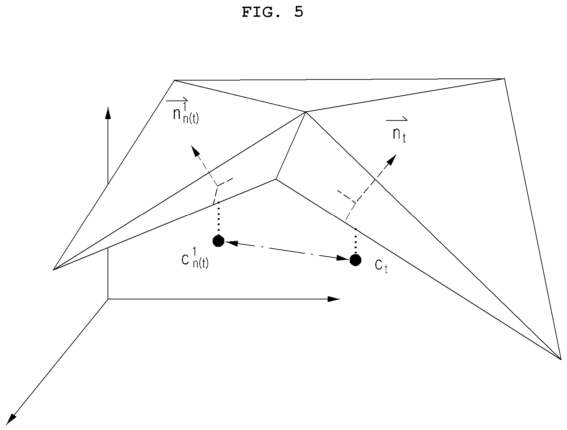

FIG. 5 is a diagram for explaining a geometric relationship between a target face and a neighboring face, according to one embodiment.

In general, the widely-used geometric features for faces of mesh data include a face's normal vector, centroid, and corner angle. However, since these are somewhat heuristic and low-level features, a learnable descriptor that can automatically capture high-level representations from them may be proposed.

Let the centroid that indicating the location of $f_t$ be $c_t$ and the centroid of its neighboring face be $c_{n(t)}^j$. In this case, the Euclidean distance between $c_t$ and $c_{n(t)}^j$ may be a low-level feature. Next, from the normal vector $\vec{n}_t$ of $f_t$ and the normal vector $\vec{n}_{n(t)}$ of its adjacent face, their cross product $\vec{n}_t \times \vec{n}_{n(t)}^j$ may be computed in order to obtain the angle between the two faces, which can be another low-level feature. On top of the low-level features, the following kernel mapping may be employed to obtain high-level features from them.

Equation 2:

$$g(\cdot,\cdot,\,\emptyset) = \psi(c_t,c_{n(t)},\,\emptyset)\,\psi(\,\vec{n}_t \times \vec{n}_{n(t)}\,,\,\emptyset)$$

where $\psi(\cdot)$ is an arbitrary kernel function like Gaussian, and ø means a set of parameters. The above kernel considers the Euclidean distance and the angle between the target face and its adjacent faces. However, the similar ambiguity arises due to the unordered nature of the target face and the three adjacent faces, which would lead to different results even if the same set of faces is involved.

We therefore propose the following descriptor that is not affected by ordering.

Equation 3:

$$g(\bar{a}_t) = \emptyset_0\, c_t + \emptyset_1\, \vec{n}_t + \emptyset_2\sum_j^3 |c_t - c_{n(t)}^j| + \emptyset_3\sum_j^3 |\,\vec{n}_t \times \vec{n}_{n(t)}^j\,|$$

Where j denotes the index of the adjacent faces, and each ø is a set of learnable parameters, which is equivalent to the filter of 1D-CNN. The first two terms learn the position and orientation of the target face, and the remaining two terms focus on the relationship between the target face and the its neighbors from the viewpoints of geometric distance and angle.

To sum up, the first layer of the explainable model (ExMeshCNN) is composed of a geodesic descriptor $g(\bar{a}_t)$ and a geometric descriptor $K(\bar{a}_t)$ which are implemented as the 1D convolution operation on each target face $f_t$ and the adjacent faces. As follows, the results of the two descriptors may be concatenated and fed as input into the following convolutional layer.

Equation 4:

$$F_t = [K(\bar{a}_t), G(\bar{a}_t)]$$

Where Ft is the feature vector for each face.

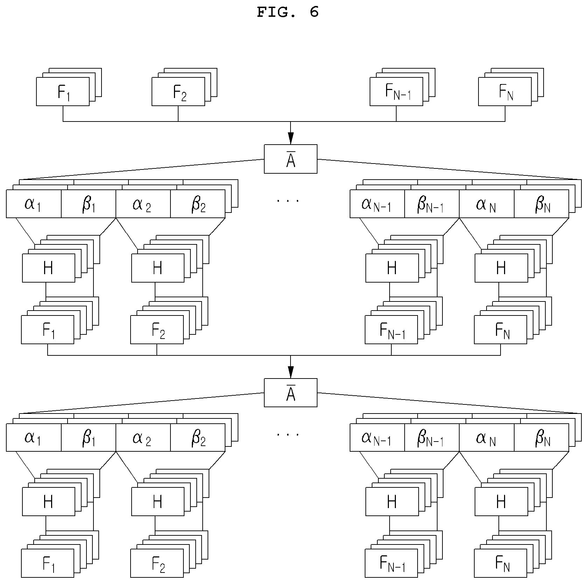

FIG. 6 is a diagram for explaining a structure of a convolutional layer of an explainable model, according to one embodiment.

Let N be the number of faces that make up an input mesh. After going through the descriptor layer, a mesh may be expressed as a matrix composed of the face feature vectors $[F_1, F_2,...,F_N]$. $C_1 = \dim(K) + \dim(g)$ is defined as the dimension of the face feature vector (or the number of input channels of the following CNN). Then, the size of the matrix is $N \times C_1$.

Next, the explainable model may be designed with a series of 1D-CNN layers that the output of the descriptor layer will go through. For each layer, the input matrix may be expanded to a combination of the two types of feature vectors $\alpha$ and $\beta$. Specifically, each $\alpha_i$ and $\beta_i$ may be defined as follows.

Equation 5:

$$\alpha_i = F_i$$

$$\beta_i = \sum_j^3 |\,F_i - F_{n(i)}^j\,|$$

Where $\alpha_i$ is a feature vector that inherits $F_i$ as it is, and $\beta_i$ is a feature vector that aggregates the relationships between the ith face and its neighbors, which is designed not to be affected by the order of the three neighbors. j denotes the index of the adjacent faces. Here, the look-up table $\overline{A}$ may be exploited to efficiently aggregate four feature vectors for each face (one target face and its three adjacent faces). As a result, the size of the input matrix temporarily increased from N×C to 2N×C, where C corresponds to the number of input channels of an arbitrary CNN layer.

Next, the 1-D convolutions specialized for the above form of input may be performed. Let $H(\cdot) : R^{2N \times C_l} \to R^{N \times C_{l+1}}$ be an arbitrary convolution filter. Here, each filter activation $H(\overline{a}_t)$ may be calculated as follows:

Equation 6:

$$H(\overline{a}_t) = w_0 \cdot \alpha_i + w_1 \cdot \beta_i$$

Here, the 1-D convolutions $H(\cdot)$ includes two kernels, each parameterized by $w_0$ and $w_1$ and focusing only on $\alpha$ and $\beta$, respectively. The results from each kernel are added to make an activation output. Thus, the window size of the convolution becomes 2. : one for $\alpha$ and one for $\beta$. Also, the stride is set to 2, whereby making the 1-D convolution to be performed in the per-face manner. The convolution is not affected by the ordering of the faces.

In this way, each first layer consumes (N×$C_l$) size of input, expands this input to the size (2N×$C_l$), and then transforms it through the 1-D convolution filters to the (2N×$C_{l+1}$) size of output. As a result, the number of channels changes for each layer but the width remains the same as N, which is the number of faces. This mechanism makes it easy to understand the saliency of each face for decision making.

In the last CNN layer, the number of output channels should be equal to the number of classes *K*. Then, the Global Average Pooling (GAP) operation may be performed to obtain the score for each class, and finally the classification may be done based on the score. GAP not only helps in reducing the number of parameters greatly while preserving the accuracy, but also makes it easier to back-project the contribution of each face on the classification.

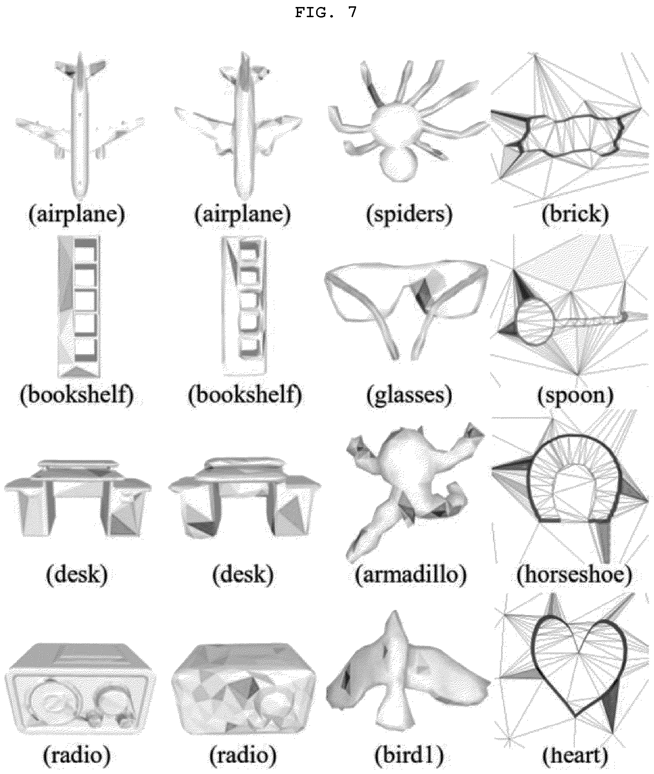

FIGS. 7 to 10 are examples for explaining results of an explainable model, according to an embodiment.

A structure of the explainable model can be seen as face-level convolutions and the final GAP operation that preserves the number of input faces. Despite not being specialized for 3D mesh data, salient surfaces for classification may be highlighted in collaboration with existing visual attribution methods. FIGS. 7 to 10 show how the representative visual attribution methods such as Layer-wise Relevance Propagation (LRP) and Gradient-weighted Class Activation Mapping (Grad-CAM) work in an explainable model.

First, LPR will be described. LPR adopts explanation by decomposition strategy. The final output of a model is considered as a relevance score, and then back-propagates the contribution of each neuron on the relevance score from the output layer to the input layer. In this case, there is a constraint that the sum of contributions of the neurons belonging to each layer must the same for all layers. To apply LPR, relevance $R^L$ may be assigned as an output of softmax as follows.

Equation 7:

$$R^L = \frac{e^{x_c}}{\sum_{k=1} e^{x_k}}$$

Where L denotes the last softmax layer, and $e^{x_c}$ is the output logit for the $c^{th}$ class. $R^L$ is distributed to the previous layer, and the value of $R^L$ is preserved in all layers. In addition, in order to keep the constraint that the contribution of each neuron cannot have a negative value, the following small modifications are made to the convolution when performing LRP.

Equation 8:

$$H(\cdot) = \max(0, w_0 \cdot \alpha + w_1 \cdot \beta)$$

Now, the following decomposition may be proceeded for each layer I:

Equation 9:

$$R_i^l = \sum_j \frac{H_{ij}^l(x_i^l)}{\sum_{i'} H_{i'j}^l(x_i^l)} R_j^{l+1}$$

Where i indexes a channel at the l[th] layer, and runs over all upper layer channels to which the ith channel is connected. $x_i^l$ indicates the output feature map of the previous layer. In this way the relevance $R^L$ at the output may be redistributed to the neurons belonging to each layer while preserving the sum of the scores.

Finally, in the first descriptor layer, the relevance may be distributed onto the face-level relevance scores, each denoted as $h_i$, as follows:

Equation 10:

$$h_i = \sum_j \frac{K_{ij}(x_i^0) + g_{ij}(x_i^0)}{\sum_{i'} K_{i'j}(x_i^0) + g_{i'j}(x_i^0)} R_j^1$$

Now i indexes the faces, and $x_i^0$ denotes low-level features of $f_i$. By aggregating the relevance scores of all the faces, the relative contribution of each face on the corresponding prediction may be visualized.

Next, Grad-CAM will be described. While LRP tries to re-distribute the relevance score at the output onto the input space, Grad-CAM focuses on information of the last layer. Specifically, it computes the class-specific gradient flowing into the final convolutional layer and then creates a coarse localization map that indicates the important areas in the input.

Let $A^k \in R^N$ be the feature map of the kth channel of the last CNN layer. Then, the neuron importance weights $\alpha_k^c$ for each class c may be computed by:

$$\alpha_k^c = \frac{1}{N} \sum_i \sum_j \frac{\partial y^c}{\partial A_{ij}^k}$$

Which captures the importance of the feature map of the kth channel for a target class c. $\frac{1}{N}\sum_i\sum_j$ means the GAP operation. Note that the size of the feature map N is equal to the number of faces.

Finally, the class-discriminative localization map of size N for a target class c, denoted as $L^c$, may be computed by:

Equation 11:

$$L^c = ReLU\left(\sum_k \alpha_k^c A^k\right)$$

Where ReLU is used to consider only a positive effect on class c. Since the explainable model is composed of the 1D-CNNs and the GAP operation without the standard fully connected layers, the idea of Grad-CAM may be applied directly to the model without modification. And, since the size of the class-discriminative localization map is N, which is equal to the number of faces, it is easy to back-project the importance scores to the input faces.

According to the embodiment, ModelNet40, Manifold40, SHREC11, and Cube can be used as data sets to evaluate the classification accuracy of the explainable model, and COSEG can be used as a data set to evaluate segmentation performance. Manifold40 is a data set to which the 2-Manifold condition of ModelNet40 is applied, and SHREC11 is a small data set that is tested with training data that is set to 10 and 16. Cube is a data set in which an object is engraved on one side of a cube.

Tables 1 to 4 show the performance of the model for each data. Tables 1 and 2 are tables comparing the classification performance with those of existing models, Table 3 is a table comparing the segmentation performance with those of existing models, and Table 4 is a table comparing the number of parameters with those of existing models.

In order to compare the performance of the method proposed in the embodiment with existing methods, it can be compared with graph-based and mesh-based models using similar methods. As can be seen from the experimental results, the method proposed in the embodiment shows high accuracy in several data sets compared to the existing methods. Additionally, it shows high accuracy in segmentation as well. It can be seen that the model proposed in the embodiment outperforms other models described in the table below despite being the lightest.

Table 1:

| Method | Modelnet40 | Manifold40 |
|---|---|---|
| MeshNet [7] | 88.9% | 88.4% |
| MeshWalker [14] | 88.9% | 90.5% |
| MeshGraphNet [27] | 89.8% | - |
| MVCNN [29] | 90.1% | - |
| PointNet++ [19] | 90.7% | 87.9% |
| MeshNet++ [26] | 91.6% | - |
| SDMC [25] | 92.2% | - |
| SubdivNet [11] | - | 91.4% |
| **ExMeshCNN** | **93.0%** | **93.4%** |

Table 2:

| Method | SHREC11 | | Cube |
|---|---|---|---|
| | Split 16 | Split 10 | |
| MeshGraphNet [27] | 28.9% | 16.0% | 27.8% |
| MeshNet [7] | 55.6% | 44.7% | 48.5% |
| MeshCNN [10] | 98.6% | 91.0% | 92.2% |
| PD-MeshNet [17] | 99.7% | 99.1% | 94.4% |
| MeshWalker [14] | 98.6% | 97.1% | 98.6% |
| Meshnet++ [26] | 100% | 99.8% | 98.5% |
| **ExMeshCNN** | **100%** | 99.3% | **100%** |
| SubdivNet [11] | 100% | **100%** | 100% |

Table 3:

| Method | #Params (in Million) |
|---|---|
| **ExMeshCNN** | **0.54** |
| SubdivNet [11] | 0.87 |
| MeshCnn [10] | 1.32 |
| MeshNet++ [26] | 1.66 |
| MeshGraphNet {27] | 4.13 |
| Meshnet [7] | 4.25 |
| MeshWalker [14] | 12.63 |

Table 4:

| Method | Vases | Chairs | Tele-aliens |
|---|---|---|---|
| PD-mESHnET [17] | 81.6% | 90.0% | 89.0% |
| MeshCNN [10] | 85.2% | 92.8% | 94.4% |

(continued)

| Method | Vases | Chairs | Tele-aliens |
|---|---|---|---|
| SubdivNet [11] | 96.7% | 96.7% | 97.3% |
| **ExMeshCNN** | 96.6% | **98.4%** | **97.8%** |

FIGS. 7 to 10 show results of applying LRP and Grad-CAM, which are commonly used when explaining two-dimensional image classification models, to an explainable model. Existing methods generally transform the model or use additional methodology to apply the explanation technique, but in the embodiment, the explanation technique can be used to explain the model's inference results without any changes. FIGS. 7 to 10, red in each image indicates important parts in the model inference results.

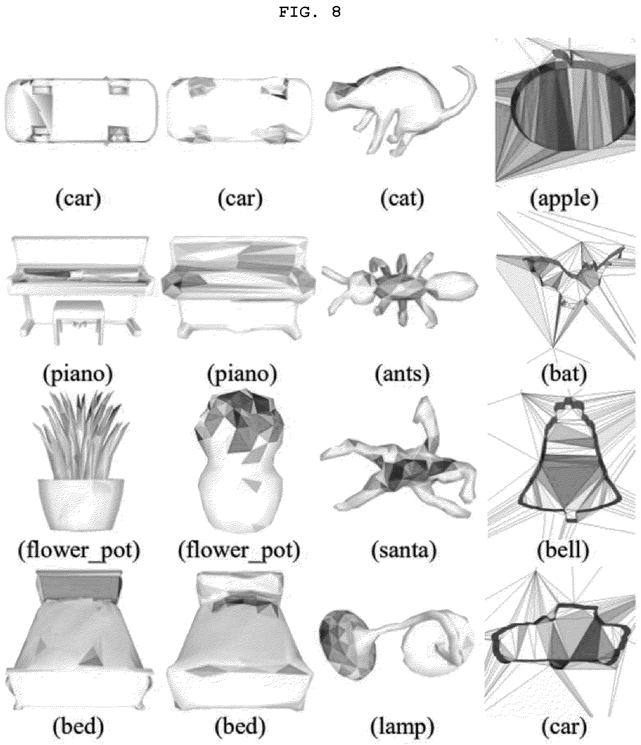

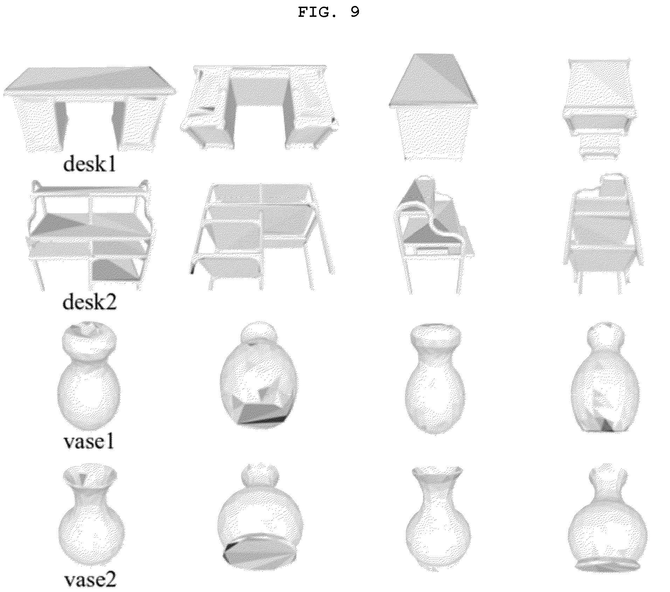

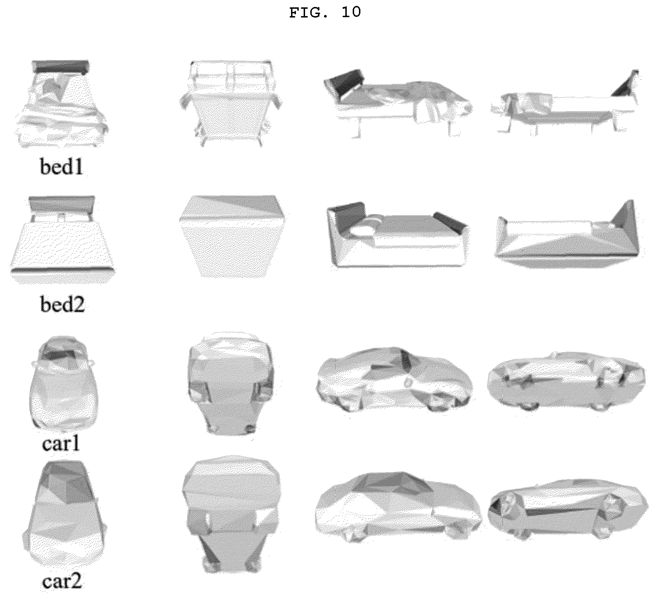

FIG. 7 shows results obtained by performing LRP on a trained explainable model, and FIG. 8 shows results of applying Grad-CAM on the explainable model. Additionally, FIGS. 9 and 10 show results of rotating the same mesh at various angles, for the purpose of observing all surface saliencies displayed on a 3D mesh. It can be confirmed once again that the explainable model learns several discriminative features to come to a final decision, and that LRP and Grad-CAM successfully captured the features. For example, when observing a car from below, we can see that the wheels are important features, and when looking at it from the front, we can see that the car's windshield is also important. In the case of beds, the frame and messy bedclothes are considered important features, but the flat bottom of the bed does not seem to be rarely taken into account. As a result, the explainable model captures class discriminative features well from mesh data, and this property can be easily visualized by performing LRP and Grad-CAM on the explainable model.

**Mode for Carrying Out the Invention**

The aforementioned system may be implemented with a hardware component, a software component, or a combination of a hardware component and a software component. For example, the system and components described in the embodiments may be implemented using one or more general-purpose computers or special-purpose computers, like a processor, a controller, an arithmetic logic unit (ALU), a digital signal processor, a microcomputer, a field programmable gate array (FPGA), a programmable logic unit (PLU), a microprocessor or any other device capable of executing or responding to an instruction. The processor may perform an operating system (OS) and one or more software applications executed on the OS. Furthermore, the processor may access, store, manipulate, process and generate data in response to the execution of software. For convenience of understanding, one processor has been illustrated as being used, but a person having ordinary skill in the art may understand that the processor may include a plurality of processing elements and/or a plurality of types of processing elements. For example, the processor may include a plurality of processors or a single processor and a single controller. Furthermore, a different processing configuration, such as a parallel processor, is also possible.

Software may include a computer program, code, an instruction, or a combination of one or more of them and may configure a processor so that it operates as desired or may instruct the processor independently or collectively. The software and/or data may be embodied in a machine, component, physical device, virtual equipment, or computer storage medium or device of any type in order to be interpreted by the processor or to provide an instruction or data to the processor. The software may be distributed to computer systems connected over a network and may be stored or executed in a distributed manner. The software and data may be stored in one or more computer-readable recording media.

The method according to the embodiments may be implemented with program instructions which may be executed through various computer means, and may be recorded in a computer-readable medium. The computer-readable media may also include, alone or in combination, program instructions, data files, data structures, and the like. The program instructions recorded on the medium may be specially designed and configured for the embodiment or may be known and usable to those skilled in computer software. Examples of the computer-readable medium may include magnetic media such as hard disks, floppy disks and magnetic tapes, optical media such as CD-ROMs and DVDs, and magneto-optical media such as floptical disks, and hardware devices specially configured to store and execute program instructions such as ROM, RAM, and flash memory. Examples of the program instructions may include machine-language code, such as code written by a compiler, and high-level language code executable by a computer using an interpreter.

As described above, although the embodiments have been described in connection with the limited embodiments and the drawings, those skilled in the art may modify and change the embodiments in various ways from the description. For example, the relevant results may be achieved even when the described technologies are performed in a different order than the described methods, and/or even when the described components such as systems, structures, devices, and circuits are coupled or combined in a different form than the described methods or are replaced or substituted by other components or equivalents.

Therefore, other implementations, other embodiments, and equivalents to the claims are also within the scope of the following claims.

**Claims**

1. A method for shape learning performed by a shape learning system, the method comprising:

   extracting geodesic features and geometric features from three-dimensional shape data; and
   classifying an object through a convolution operation on the extracted geodesic features and the extracted geometric features with respect to faces constituting the three-dimensional shape data.

2. The method of claim 1, further comprising visualizing a result of object classification from the three-dimensional shape data by using a convolution-based neural network model for explainable three-dimensional shape learning.

3. The method of claim 2, wherein the convolution-based neural network model for explainable three-dimensional shape learning includes:

   a descriptor layer that extracts geodetic features and geometric features using a target face and adjacent faces from the three-dimensional shape data; and
   a convolutional layer that performs a convolution operation using the extracted geodetic features and geometric features.

4. The method of claim 1, wherein the three-dimensional shape data has a structure in which nodes, edges, and faces constituting the three-dimensional shape data are irregular.

5. The method of claim 1, wherein the extracting includes constructing, in list form, identification information for a plurality of faces adjacent to each face with respect to the faces constituting the three-dimensional shape data, and creating a data structure so as to obtain information about the nodes and edges of each face through the identification information constructed in list form.

6. The method of claim 1, wherein the extracting includes extracting geodesic features from three-dimensional shape data using order-invariant kernel mapping.

7. The method of claim 1, wherein the extracting includes extracting geometric features based on the positions and orientations of a target face and surrounding faces.

8. The method of claim 7, wherein the extracting includes extracting geometric features based on information on the distance ratios and angles between the target surface and the surrounding faces.

9. The method of claim 1, wherein the classifying includes feeding, into a convolutional layer, a feature vector for each face that integrates the geodesic features and the geometric features.

10. The method of claim 9, wherein the classifying includes performing a one-dimensional convolution by using a feature vector that inherits a particular face based on the feature vector of each face and a feature vector that aggregates the relationships between the particular face and faces adjacent to the particular face.

11. The method of claim 10, wherein the extracting includes performing a GAP (global average pooling) operation to obtain a score for each class since the one-dimensional convolution produces an output with the number of faces remaining the same, and performing object classification based on the obtained score.

12. A computer program stored in a non-transitory computer-readable recording medium in order to execute the method for shape learning according to any of claims 1 to 11 by a shape learning system.

13. A shape learning system comprising:

   a feature extraction unit that extracts geodesic features and geometric features from three-dimensional shape data; and
   classifying an object through a convolution operation on the extracted geodesic features and the extracted geometric features with respect to faces constituting the three-dimensional shape data.

**14.** The shape learning system of claim 13, wherein a result of object classification from the three-dimensional shape data is visualized by using a convolution-based neural network model for explainable three-dimensional shape learning.

FIG. 1

100

| Processor |
|---|
| Feature extraction unit — 110 |
| Object classification unit — 120 |

FIG. 2

```
                        ┌──────────┐
                        │  Start   │
                        └────┬─────┘
                             │
                             ▼
┌─────────────────────────────────────────────────────────────┐
│ Extract geodesic features and geometric features from 3D      │──── 210
│ shape data                                                    │
└─────────────────────────────┬───────────────────────────────┘
                              │
                              ▼
┌─────────────────────────────────────────────────────────────┐
│ Classify object through convolution operation on extracted    │
│ geodesic features and extracted geometric features with        │──── 220
│ respect to faces constituting 3D shape data                   │
└─────────────────────────────┬───────────────────────────────┘
                              │
                              ▼
                        ┌──────────┐
                        │   End    │
                        └──────────┘
```

FIG. 3

Explainable model (300)

Descriptor layer — 310

3D shape data →

Geodesic descriptor — 311

Geometric descriptor — 312

320 — Convolutional layer → Object classification (Visualization of inference results )

FIG. 4

Path 1                              Path 2

FIG. 5

FIG. 6

FIG. 7

(airplane)  (airplane)  (spiders)  (brick)

(bookshelf)  (bookshelf)  (glasses)  (spoon)

(desk)  (desk)  (armadillo)  (horseshoe)

(radio)  (radio)  (bird1)  (heart)

FIG. 8

(car)  (car)  (cat)  (apple)

(piano)  (piano)  (ants)  (bat)

(flower_pot)  (flower_pot)  (santa)  (bell)

(bed)  (bed)  (lamp)  (car)

FIG. 9

desk1

desk2

vase1

vase2

FIG. 10

bed1

bed2

car1

car2

## INTERNATIONAL SEARCH REPORT

| International application No. |
| --- |
| **PCT/KR2023/011438** |

**A. CLASSIFICATION OF SUBJECT MATTER**

**G06V 20/64**(2022.01)i; **G06V 10/422**(2022.01)i; **G06V 10/764**(2022.01)i; **G06V 10/82**(2022.01)i; **G06T 7/60**(2006.01)i; **G06N 3/08**(2006.01)i

According to International Patent Classification (IPC) or to both national classification and IPC

**B. FIELDS SEARCHED**

Minimum documentation searched (classification system followed by classification symbols)

G06V 20/64(2022.01); G06K 9/00(2006.01); G06K 9/62(2006.01); G06T 15/04(2011.01); G06T 17/00(2006.01); G06V 10/10(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 3차원 형상(3D shape), 측지 특징(geodetic feature), 기하학적 특징(geometric feature), 면(surface), 컨볼루션(convolution), 분류(classification)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2018-0126220 A (SAMSUNG ELECTRONICS CO., LTD.) 27 November 2018 (2018-11-27)<br>See paragraphs [0055]-[0056] and [0097]-[0098] and claim 1. | 1-2,12-14 |
| A | | 3-11 |
| Y | KR 10-2019-0050639 A (KT CORPORATION) 13 May 2019 (2019-05-13)<br>See paragraph [0011] and claim 1. | 1-2,12-14 |
| A | KR 10-1007276 B1 (TECHNION RESEARCH & DEVELOPMENT FOUNDATION LTD.) 13 January 2011 (2011-01-13)<br>See claim 25 and figures 1-11. | 1-14 |
| A | KR 10-2021-0136597 A (KOREA UNIVERSITY OF TECHNOLOGY AND EDUCATION INDUSTRY-UNIVERSITY COOPERATION FOUNDATION) 17 November 2021 (2021-11-17)<br>See claims 1 and 5 and figures 1-5. | 1-14 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 November 2023** | **09 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011438** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2157793 B1 (MORPHEUS CO., LTD.) 18 September 2020 (2020-09-18)<br>See claims 1-2 and figures 2-6. | 1-14 |

## INTERNATIONAL SEARCH REPORT
### Information on patent family members

International application No.

**PCT/KR2023/011438**

| Patent document cited in search report | | | Publication date (day/month/year) | Patent family member(s) | | | Publication date (day/month/year) |
|---|---|---|---|---|---|---|---|
| KR | 10-2018-0126220 | A | 27 November 2018 | EP | 3598342 | A1 | 22 January 2020 |
| | | | | EP | 3598342 | A4 | 06 May 2020 |
| | | | | KR | 10-2400017 | B1 | 19 May 2022 |
| | | | | US | 11176402 | B2 | 16 November 2021 |
| | | | | US | 2020-0193207 | A1 | 18 June 2020 |
| | | | | WO | 2018-212494 | A1 | 22 November 2018 |
| KR | 10-2019-0050639 | A | 13 May 2019 | KR | 10-2022-0146396 | A | 01 November 2022 |
| | | | | KR | 10-2459487 | B1 | 26 October 2022 |
| KR | 10-1007276 | B1 | 13 January 2011 | AU | 2003-272048 | A1 | 23 April 2004 |
| | | | | EP | 1550082 | A2 | 06 July 2005 |
| | | | | EP | 1550082 | B1 | 06 January 2010 |
| | | | | EP | 1849122 | A1 | 31 October 2007 |
| | | | | EP | 1849122 | B1 | 14 April 2010 |
| | | | | JP | 2006-502478 | A | 19 January 2006 |
| | | | | JP | 4445864 | B2 | 07 April 2010 |
| | | | | US | 2004-0076313 | A1 | 22 April 2004 |
| | | | | US | 2005-0180613 | A1 | 18 August 2005 |
| | | | | US | 2006-0251298 | A1 | 09 November 2006 |
| | | | | US | 2008-0292147 | A1 | 27 November 2008 |
| | | | | US | 6947579 | B2 | 20 September 2005 |
| | | | | US | 7421098 | B2 | 02 September 2008 |
| | | | | US | 7623687 | B2 | 24 November 2009 |
| | | | | US | 8155400 | B2 | 10 April 2012 |
| | | | | WO | 2004-032061 | A2 | 15 April 2004 |
| | | | | WO | 2004-032061 | A3 | 06 May 2004 |
| | | | | WO | 2006-087701 | A1 | 24 August 2006 |
| KR | 10-2021-0136597 | A | 17 November 2021 | KR | 10-2466214 | B1 | 10 November 2022 |
| KR | 10-2157793 | B1 | 18 September 2020 | None | | | |

Form PCT/ISA/210 (patent family annex) (July 2022)